# EUROPÄISCHE PATENTSCHRIFT

(11) **EP 0 780 179 B1**
(45) Veröffentlichungstag und Bekanntmachung des Hinweises auf die Patenterteilung: **20.11.2002**
(21) Anmeldenummer: 96119655.7
(22) Anmeldetag: 07.12.1996
(51) Int. Cl.: B23B 29/20

(54) **Werkzeugfixierung**
Tool fastener
Fixation d'outil

(30) Priorität: 22.12.1995 DE 19548151
(43) Veröffentlichungstag der Anmeldung: 25.06.1997
(60) Teilanmeldung: 00110096.5
(73) Patentinhaber: INDEX-WERKE GMBH & CO. KG HAHN & TESSKY, 73730 Esslingen (DE)
(72) Erfinder: Grossmann, Walter, 73666 Baltmannsweiler (DE)
(74) Vertreter: Beck, Jürgen, Dr. Dipl.-Phys.

(56) Entgegenhaltungen:
- WO-A-93/23191
- DE-A- 2 736 412
- DE-A- 3 330 653
- GB-A- 563 058
- GB-A- 2 164 595
- US-A- 922 429
- US-A- 3 402 625
- US-A- 3 490 318
- US-A- 3 498 653
- US-A- 3 815 928

## Beschreibung

Die Erfindung betrifft eine Werkzeugfixiereinrichtung für Werkzeugmaschinen, umfassend einen Werkzeughalter mit einem das Werkzeug tragenden Werkzeughalterkörper, welcher eine Anlagefläche aufweist und einen von dieser abstehenden Schaft zum Spannen des Werkzeughalters trägt, einen Werkzeugträger mit einer Werkzeugstation umfassend eine Auflagefläche und eine Aufnahme für den Schaft, wobei die Anlagefläche dann gegen die Auflagefläche anliegt, wenn der Werkzeughalter mit seinem Schaft in der Aufnahme eingespannt ist, und eine zwischen Werkzeughalterkörper und Werkzeugträger wirksame Ausrichteinrichtung zur Positionierung des Werkzeughalterkörpers relativ zum Werkzeugträger, insbesondere hinsichtlich einer Verdrehung um eine Längsachse des Schaftes.

Eine derartige Werkzeugfixiereinrichtung ist aus der DE 39 29 802 C1 bekannt.

Bei dieser sind an dem Werkzeughalterkörper notwendigerweise zwei Vorsprünge angeordnet, welche jeweils noch eine Schraube als Justierelement tragen, wobei der Werkzeughalterkörper relativ zum Werkzeugträger durch die beiden gegenüberliegende Stirnflächen des Werkzeugträgers beaufschlagenden Justierelemente ausrichtbar ist.

Diese Lösung hat den Nachteil, daß jeder Werkzeughalterkörper bei jedem Einsetzen in die Werkzeugstation mittels der Justiereinrichtungen in der eingesetzten Stellung justiert werden muß, da sich bei mehrfachem Herausnehmen und Einsetzen des Werkzeughalters Veränderungen der von den Justiereinrichtungen beaufschlagten Oberflächen des Werkzeugträgers relativ zur Aufnahme und somit Ungenauigkeiten ergeben.

Aus der US 922,429 ist zwar eine Werkzeugfixiereinrichtung bekannt, die zwei zusammenwirkende Formschlußelemente umfaßt, allerdings ist eines derselben am Schaft angeordnet und das andere am Werkzeugträger und beide sind nicht spielfrei miteinander in Eingriff bringbar, so daß eine exakte Justierung des Werkzeughalters relativ zum Werkzeugträger nicht möglich ist.

Der Erfindung liegt daher, ausgehend von der DE 39 29 802 C1 die Aufgabe zugrunde, eine Werkzeugfixiereinrichtung der gattungsgemäßen Art derart zu verbessern, daß die Werkzeughalter in der jeweiligen Werkzeugstation des Werkzeugträgers nicht bei jedem Einsetzen jeweils neu justiert werden müssen.

Diese Aufgabe wird bei einer Werkzeugfixiereinrichtung der eingangs beschriebenen Art erfindungsgemäß dadurch gelöst, daß die Ausrichteinrichtung ein erstes und ein zweites Ausrichtelement umfaßt, von denen das erste am Werkzeugträger und das zweite am Werkzeughalterkörper angeordnet ist, daß eines der Ausrichtelemente relativ zu dem dieses tragenden Werkzeugträger oder Werkzeughalterkörper justierbar ist, und daß die Ausrichtelemente bei in der Aufnahme eingespanntem Schaft mittels spielfrei ineinandergreifenden Formschlußelementen den Werkzeughalterkörper relativ zum Werkzeugträger, insbesondere hinsichtlich der Verdrehung um die Längsachse des Schaftes,in einer einzigen Stellung ausgerichtet fixieren.

Der Vorteil der erfindungsgemäßen Lösung ist darin zu sehen, daß die vom Werkzeugträger getrennten Formschlußelemente die Möglichkeit eröffnen, diese in eigens für diese konzipierten Herstellungsschritten einerseits mit der entsprechenden Verschleißfestigkeit und andererseits mit der gewünschten Präzision herzustellen und somit die Möglichkeit zu schaffen, bei einmal justiert relativ zu Werkzeugträger und Werkzeughalterkörper angeordneten Formschlußelementen ausschließlich durch Herstellen des Formschlusses zwischen den Formschlußelementen dieselbe Ausrichtung des Werkzeughalterkörpers zum Werkzeugträger wiederholt zu reproduzieren.

Besonders vorteilhaft ist es, wenn die Formschlußelemente durch eine Bewegung in Einsteckrichtung des Werkzeughalters in der Werkzeugstation in Eingriff bringbar sind, da dann die Möglichkeit besteht, gleichzeitig mit dem Einsetzen des Werkzeughalters den Eingriff zwischen den Formschlußelementen herzustellen.

Eine besonders vorteilhafte Lösung der Erfindung sieht vor, daß eines der Formschlußelemente eine Aufnahme mit einander zugewandten Fixierflanken und das andere der Formschlußelemente einen Einsatz für die Aufnahme mit in entgegengesetzte Richtungen weisenden Außenflanken aufweist, wobei der Einsatz mit seinen Außenflanken so in die Aufnahme einsetzbar ist, daß die Außenflanken an den Fixierflanken anliegen.

Die Fixierflanken können prinzipiell parallel zueinander verlaufen. Besonders günstig ist es jedoch, wenn die Fixierflanken quer zu der Einsteckrichtung einen Abstand aufweisen, welcher mit zunehmender Erstreckung der Fixierflanken in Einsteckrichtung geringer wird, so daß die Möglichkeit besteht, beim Einstecken des Werkzeughalters den Einsatz mit seinen Außenflanken in die Aufnahme mit den Fixierflanken einzuführen und die Außenflanken an den Fixierflanken zur Anlage zu bringen.

Die Außenflanken und die Fixierflanken können prinzipiell so relativ zueinander verlaufen, daß bei zwischen den Fixierflanken eingestecktem Einsatz die Außenflanken und die Fixierflanken punktförmig aneinander anliegen. Vorteilhaft ist es aber, insbesondere um möglichst große Kräfte durch die formschlüssig ineinandergreifenden Formschlußelemente übertragen zu können, wenn die Fixierflanken und die Außenflanken aneinander angepaßt sind und zumindest in einer Richtung linienförmig aneinander anliegen.

Besonders vorteilhaft ist es dabei, wenn die Außenflanken oder die Fixierflanken konvex und die jeweils anderen Flanken einen geringeren Krümmungsradius aufweisen, vorzugsweise flach, d. h. gerade ausgebildet sind, so daß selbst bei nicht ganz idealer Anpassung der Form der Fixierflanken an die Form der Außenflanken eine Anlage der beiden aneinander mit einem möglichst großen Anschmiegeradius gegeben ist.

Da jedoch bei der Drehbearbeitung vielfach große Momente und damit große Kräfte auf die Formschlußelemente auftreten, ist es besonders vorteilhaft, wenn die Formschlußelemente beim formschlüssigen Ineinandergreifen im wesentlichen flächig aneinander anliegen.

Eine derartige flächige Anlage läßt sich besonders zweckmäßig dann realisieren, wenn Formschlußelemente mit Paßflächen aneinander anliegen.

Eine aufgrund ihrer Einfachheit besonders kostengünstige Lösung sieht dabei vor, daß die Formschlußelemente jeweils einstückig an das jeweilige Ausrichtelement angeformt sind.

Hinsichtlich der Art der Anordnung der ersten und zweiten Ausrichtelemente wurden bislang keine näheren Angaben gemacht.

Eine aufgrund ihrer Einfachheit besonders günstige Lösung sieht vor, daß mindestens eines der Ausrichtelemente, vorzugsweise beide, nach ihrer exakten Justierung fixierbar sind, beispielsweise mittels Schrauben. In einem derartigen Fall einer kraftschlüssigen Fixierung der Ausrichtelemente, besteht die Möglichkeit, daß im Fall einer Werkzeugkollision eine Verschiebung der Ausrichtelemente ohne Beschädigung derselben und der Maschine möglich ist, die durch Nachjustieren wiederum korrigierbar ist.

Ferner wäre es beispielsweise möglich, die Ausrichtelemente selbst in einer Justiereinrichtung aufzunehmen und somit die Ausrichtelemente selbst relativ zum Werkzeugträger oder zum Werkzeughalterkörper fixierbar anzuordnen.

Eine derartige Lösung wäre jedoch aufwendig und würde stets die Gefahr einer nachträglichen Dejustierung beinhalten.

Aus diesem Grund sieht ein besonders vorteilhaftes Ausführungsbeispiel vor, daß die Ausrichtelemente nach ihrer exakten Justierung relativ zum Werkzeugträger oder Werkzeughalterkörper unverschiebbar an diesen fixiert sind.

Eine Möglichkeit, die Ausrichtelemente unverschiebbar mit dem Werkzeugträger und dem Werkzeughalterkörper zu verbinden, wäre die, die Ausrichtelemente anzuschweißen. Dies ist jedoch aufwendig und erschwert eine spätere Demontage.

Aus diesem Grund sieht ein besonders vorteilhaftes Ausführungsbeispiel vor, daß die Ausrichtelemente über Formschlußverbindungen unverschiebbar mit dem Werkzeugträger oder dem Werkzeughalterkörper verbunden sind. Eine vorteilhafte derartige Formschlußverbindung ist durch nach Justierung der Ausrichtelemente angebrachte Stiftverbindungen realisierbar.

Die Ausrichtelemente könnten prinzipiell beliebig angeordnet sein.

So ist es besonders günstig, wenn das am Werkzeugträger angeordnete Ausrichtelement auf einer Außenfläche desselben sitzt und damit zur Montage und beispielsweise auch zur Justierung gut zugänglich ist.

Ferner ist es günstig, wenn das am Werkzeughalterkörper angeordente Ausrichtelement auf einer Außenfläche des Werkzeughalterkörpers sitzt um ebenfalls zur Montage und beispielsweise auch zur Justierung gut zugänglich zu sein.

Besonders vorteilhaft ist eine Lösung, bei welcher die das Ausrichtelement tragenden Außenfläche des Werkzeugträgers und die das Ausrichtelement tragende Außenfläche des Werkzeughalterkörpers miteinander fluchten.

Ein weiteres vorteilhaftes Ausführungsbeispiel sieht vor, daß das erste Ausrichtelement und das diesem zugeordnete Formschlußelement auf einer dem Werkzeughalter abgewandten Seite einer durch die Auflagefläche definierten Ebene liegen. Damit können in diese Werkzeugstation alle Arten von Werkzeughaltern eingesetzt werden, ohne daß eine Behinderung.des Einsatzes durch das Ausrichtelement und das diesem zugeordnete Formschlußelement eintreten kann.

Ein besonders vorteilhaftes Ausführungsbeispiel einer erfindungsgemäßen Werkzeugfixiereinrichtung umfaßt einen Werkzeugträger mit einer Vielzahl von Werkzeugstationen, in welche Werkzeughalter einsetzbar sind, wobei mindestens zwei Werkzeugstationen jeweils mit einem ersten Ausrichtelement versehen sind, welches so justiert ist, daß ein in jede dieser Werkzeugstationen eingesetzter und mit einem zweiten Ausrichtelement versehener Werkzeughalter in seiner jeweiligen Arbeitsposition identisch ausgerichtet ist.

Der Vorteil der erfindungsgemäßen Lösung ist darin zu sehen, daß durch die Anordnung der beiden Ausrichtelemente sowohl am Werkzeugträger als auch an dem Werkzeughalterkörper die Möglichkeit besteht, diese beim Anordnen sowohl an dem Werkzeugträger als auch dem Werkzeughalterkörper zu justieren und dadurch über diese zwei Justiermöglichkeiten sämtliche Toleranzen auszugleichen, so daß dann beim Einsetzen eines derart vorbereiteten Werkzeughalters in eine der derart vorbereiteten Werkzeugstationen des Werkzeugträgers lediglich die Formschlußelemente noch formschlüssig und spielfrei ineinander zu greifen haben, um die bei der Montage der Fixierelemente bereits vorgegebene Ausrichtung des Werkzeughalters relativ zum Werkzeugträger zu erhalten.

Mit dieser Lösung ist somit die Möglichkeit geschaffen, bereits bei der Montage der Ausrichtelemente sowohl am Werkzeugträger als auch am Werkzeughalterkörper die relative Ausrichtung des Werkzeughalters zum Werkzeugträger festzulegen, so daß keinerlei nachträgliche Justierung nach Einsetzen jedes derart vorbereiteten Werkzeughalters in jede derart vorbereitete Werkzeugstation des Werkzeugträgers erforderlich ist.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine Draufsicht auf ein Ausschnitt einer Drehmaschine mit einer erfindungsgemäßen Werkzeugfixiereinrichtung;
- Fig. 2: eine Draufsicht auf den Revolver in Richtung des Pfeils A in Fig. 1;
- Fig. 3: eine vergrößerte Darstellung von Werkzeughalter und Revolver in einem Bereich B in Fig. 1;
- Fig. 4: eine Draufsicht auf Werkzeughalter und Revolver in Richtung des Pfeils C in Fig. 3;

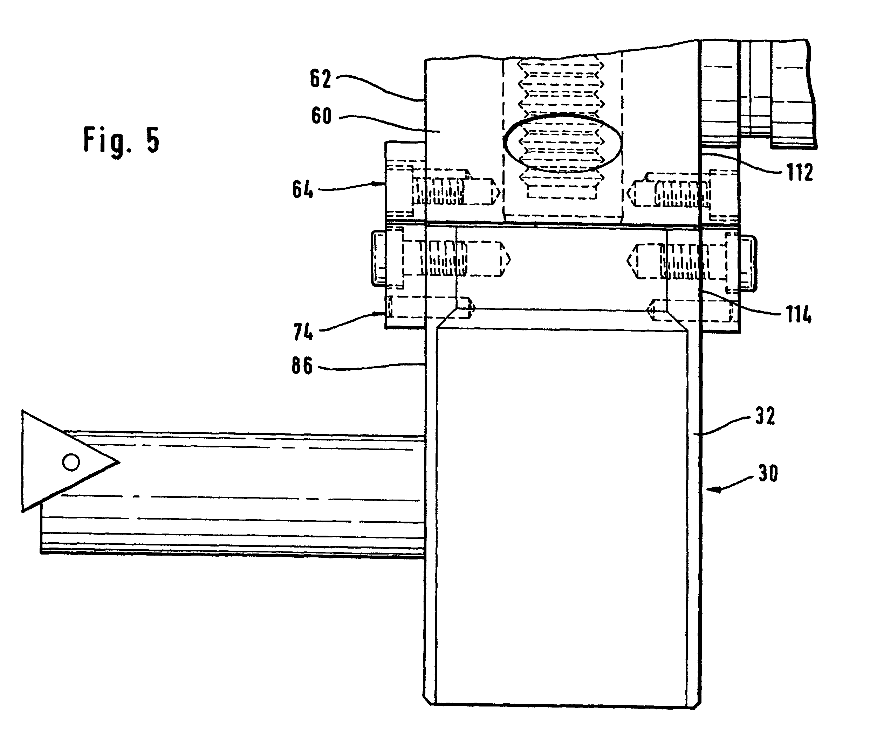

- Fig. 5: eine Darstellung eines zweiten Ausführungsbeispiels einer erfindungsgemäßen Werkzeugfixiereinrichtung ähnlich Fig. 3;
- Fig. 6: eine Darstellung eines Ausschnitts einer Drehmaschine mit einem dritten Ausführungsbeispiel einer erfindungsgemäßen Werkzeugfixiereinrichtung ähnlich Fig. 1;
- Fig. 7: eine Draufsicht auf den Revolver in Richtung des Pfeils D in Fig. 6 und
- Fig. 8: eine Draufsicht ähnlich Fig. 4 eines vierten Ausführungsbeispiels.

Ein Ausführungsbeispiel einer Drehmaschine mit einer erfindungsgemäßen Werkzeugfixiereinrichtung umfaßt eine an einem Maschinengestell 10 angeordnete Spindel 12 zur Aufnahme eines Werkstücks 14, wobei die Spindel 12 um eine Spindelachse 16 drehbar ist.

An dem Maschinengestell 10 ist ferner ein Werkzeugschlitten 18 beispielsweise in X- und Z-Richtung verschieblich gelagert, wobei der Werkzeugschlitten 18 einen als Ganzes mit 20 bezeichneten Revolver trägt, welcher um eine Revolverschaltachse 22, die in diesem Ausführungsbeispiel parallel zur Spindelachse 16 verläuft, drehbar ist.

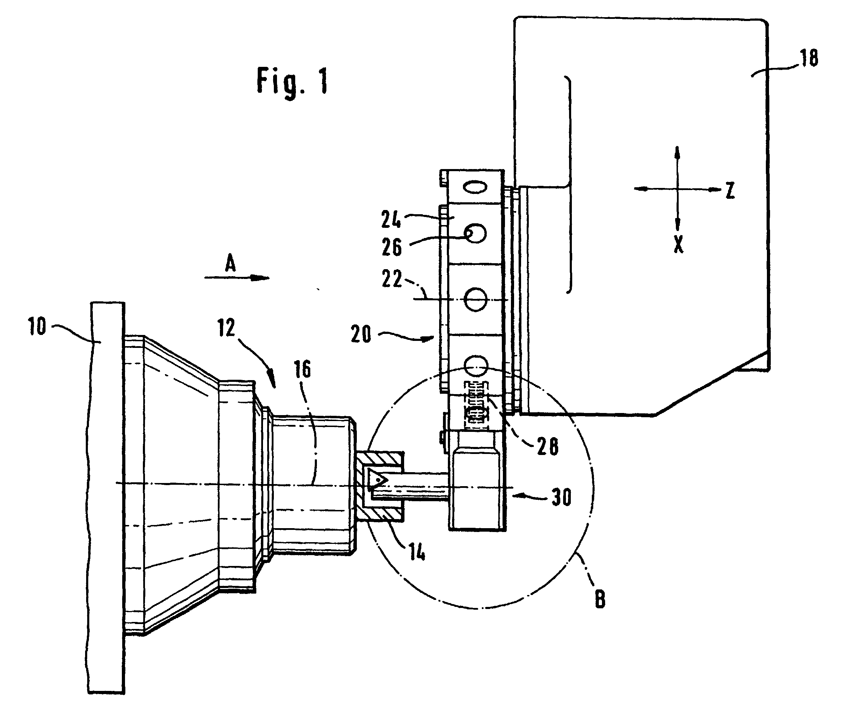

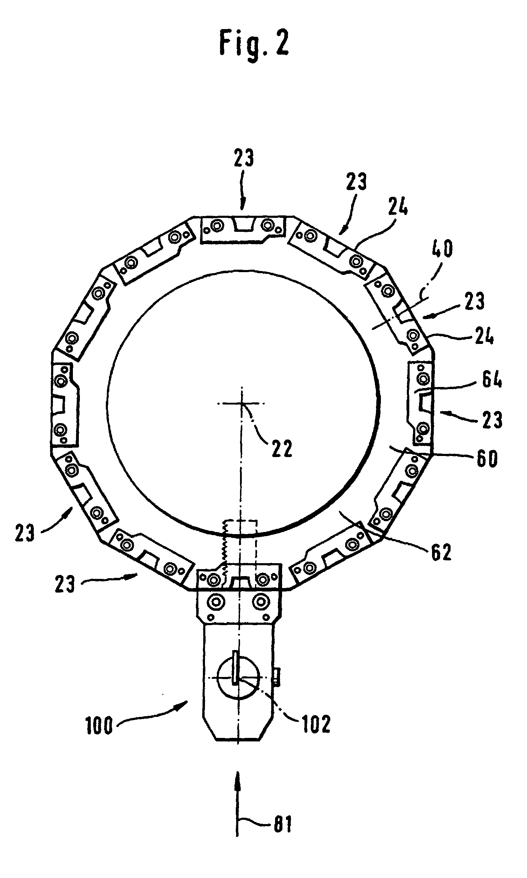

Der Revolver 20 weist, wie in Fig. 1 und 2 dargestellt, an seinem Außenmantel eine Vielzahl von Werkzeugstationen 23 auf, von denen jede eine als Planfläche ausgebildete Auflagefläche 24 umfaßt, die eine Aufnahme 26 für einen Schaft 28 eines Werkzeughalters 30 umgibt.

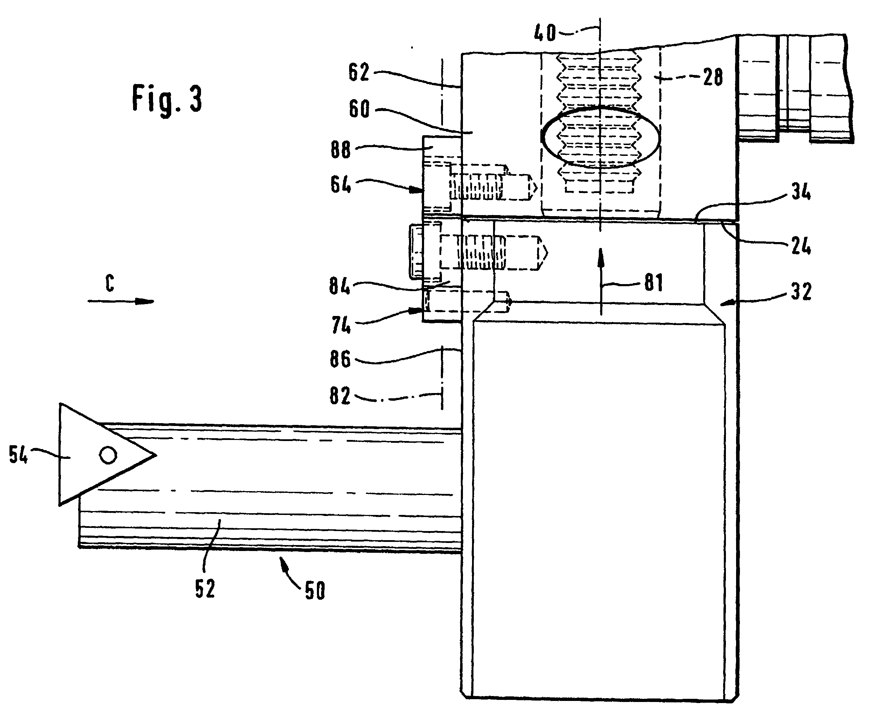

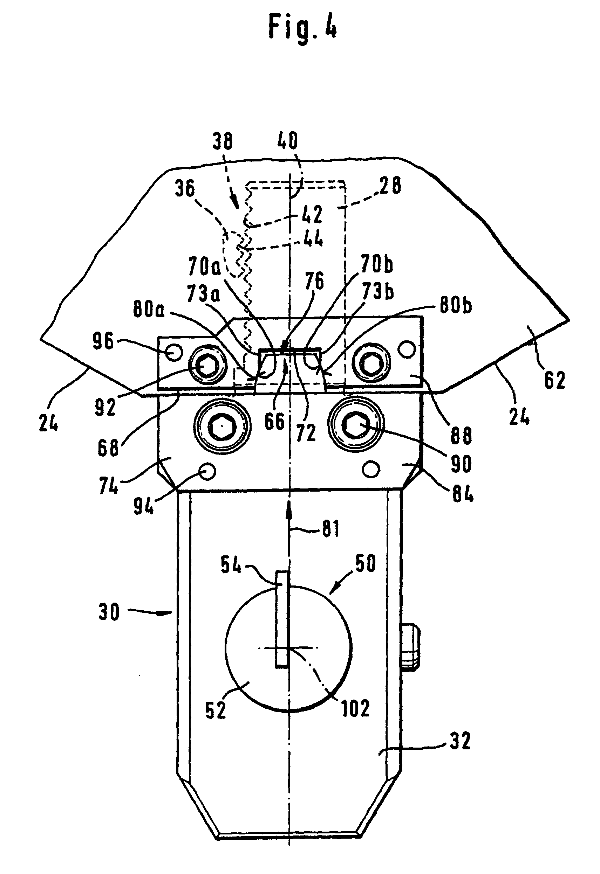

Wie in Fig. 3 und 4 dargestellt, umfaßt der Werkzeughalter 30 einen Werkzeughalterkörper 32 mit einer Anlagefläche 34, welche auf der Auflagefläche 24 des Revolvers 20 abstützbar ist. Ferner ist am Werkzeughalterkörper 32 der Schaft 28 gehalten, welcher bei auf der Auflagefläche 24 aufliegender Anlagefläche 34 in die Aufnahme 26 eingreift und dieser mittels eines Spannelements 36 einer Spanneinrichtung festspannbar ist.

Vorzugsweise ist der Schaft 28 als Zylinderschaft nach DIN 69880 ausgebildet und weist entweder auf einer Seite oder auf zwei gegenüberliegenden Seiten eine Abflachung 38 auf, welche mit einer quer zu einer in radialer Richtung zur Revolverschaltachse 22 verlaufenden Längsachse 40 des Schaftes verlaufenden Verzahnung 42 versehen ist, in welche das ebenfalls mit einer Verzahnung 44 versehene Spannelement 36 eingreift.

Das Spannelement 36 beaufschlagt dabei den Schaft 28 mit einer Kraft, welche die Anlagefläche 34 gegen die Auflagefläche 24 preßt.

An dem Werkzeughalterkörper 32 des Werkzeughalters 30 ist ferner noch ein als Ganzes mit 50 bezeichnetes Werkzeug gehalten, welches beispielsweise einen Schneidplattenhalter 52 mit einer Schneidplatte 54 umfaßt.

Zur exakten Ausrichtung des Werkzeughalters 30 relativ zum Revolver 20 ist beispielsweise ein Revolverkopf 60 nicht nur mit den Auflageflächen 24 versehen, sondern trägt, wie insbesondere in Fig. 2 und 3 dargestellt, beispielsweise auf ihrer Stirnfläche 62 ein erstes Ausrichtelement 64, welches, wie in Fig. 4 dargestellt, als Formschlußelement eine Aussparung 66 aufweist, die sich von einer dem Werkzeughalter 30 zugewandten Seite 68 in das Fixierelement 64 hineinerstreckt und einander gegenüberliegende Fixierflanken 70a und 70b aufweist, welche sich zwischen der dem Werkzeughalter 30 zugewandten Seite 68 des Ausrichtelements 64 und einer Grundseite 72 der Aussparung 66 erstrecken, jedoch vorzugsweise zumindest mit ihren der Grundseite 72 zugewandten Endbereichen im Abstand von der Grundseite 72 enden, so daß zwischen diesen Endbereichen und der Grundseite 72 Flächenabschnitte 73a, b liegen, welche nicht zu einem Formschluß beitragen und beispielsweise ungefähr parallel zueinander verlaufen.

Mit dem ersten Ausrichtelement 64 korrespondiert ein zweites Ausrichtelement 74, welches als Formschlußelement einen zahnähnlichen Vorsprung 76 aufweist, der bei fest am Revolver 20 montiertem Werkzeughalter 30 in die Aussparung 66 eingreift und dabei mit Außenflanken 80a und 80b an den Fixierflanken 70a, b formschlüssig anliegt, jedoch keine Berührung mit den Flächenabschnitten 73a, b hat.

Die beiden Fixierflanken 70a, b sind vorzugsweise so relativ zueinander angeordnet, daß sie quer zu einer Einsteckrichtung 81 des Werkzeughalters 30 einen Abstand voneinander auf weisen, welcher mit zunehmender Erstreckung in Einsteckrichtung 81 geringer wird, so daß beim Einführen des die Außenflanken 80a, b aufweisenden Vorsprungs 76 zwischen die Fixierflanken 70a, b die Außenflanken 80a, b des Vorsprungs 76 spielfrei an die Fixierflanken 70a, b anlegbar sind und in der gespannten Stellung des Werkzeughalters 30 diese spielfreie Stellung aufrechterhalten wird.

Besonders vorteilhaft ist es dabei, wenn die Außenflanken 80a, b konvex, beispielsweise in Form von Zahnflanken eines Zahnrades geformt sind, und die Fixierflanken 70a, b der Aussparung 66 eben ausgebildet sind, so daß die Außenflanken 80a, b und die Fixierflanken 70a, b trotz nicht vollflächiger Anlage aneinander mit einem möglichst großen Anschmiegeradius gegeneinander anliegen, so daß trotzdem eine flächenhafte oder flächenähnliche Anlage entsteht und punkt- oder linienförmige Anlage derselben aneinander vermeidbar ist.

Die Aussparung 66 und der Vorsprung 76 erstrecken sich dabei in einer Ebene 82, welche parallel zur Längsachse 40 des Schafts 28 verläuft, wobei Flankenflächen der Fixierflanken 70a, b und Außenflanken 80a, b sich zusätzlich noch quer zur Ebene 82 erstrecken.

Der zahnähnliche Vorsprung 76 ist beispielsweise einstückig an einem plattenförmigen Ausrichtelementkörper 84 angeformt, welcher auf einer Stirnfläche 86 des Werkzeughalterkörpers 32 montiert ist, wobei die Stirnfläche 86 vorzugsweise mit der Stirnfläche 62 des Revolverkopfs 60 fluchtet.

Auch das erste Ausrichtelement 64 umfaßt einen plattenförmigen Ausrichtelementkörper 88, welcher mit der Aussparung 66 versehen ist und auf der Stirnfläche 62 des Revolverkopfs 60 aufliegt.

Beide Ausrichtelementkörper 84, 88 sind entweder mit dem Werkzeughalterkörper 32 oder dem Revolverkopf 60 mittels Schrauben 90 bzw. 92 verbunden und zusätzlich noch in ihrer exakt justierten Position mittels Stiften 94, 96 fixiert.

Wie in Fig. 2 dargestellt, kann jeder Werkzeugstation 23 ein erstes Ausrichtelement 64 zugeordnet werden, wobei in jeder Werkzeugposition 23 das Ausrichtelement 64 mittels eines mit einem zweiten Ausrichtelement 74 versehenen Meister-Werkzeughalters 100 justierbar ist, der beispielsweise so ausgerichtet wird, daß eine Werkzeugachse 102 parallel zur Spindelachse 16 verläuft.

Entsprechend dieser Ausrichtung des Meister-Werkzeughalters 100 mit dem fest mit diesem verbundenen zweiten Ausrichtelement 74 wird das erste Ausrichtelement 64 an dem Revolverkopf 60 ausgerichtet, beispielsweise mittels der Schrauben 92 fixiert, und nach der Fixierung zusätzlich mit den Stiften 96 mit dem Revolverkopf 60 verstiftet und somit unverschieblich relativ zum Revolverkopf 60 fixiert.

Damit ist jeder einzelnen Werkzeugstation 23 des Revolverkopfs 60 eine eindeutige Drehausrichtung eines jeden Werkzeughalters 30 gegenüber einer Drehung um die Längsachse 40 des Schaftes 28 vorgebbar, so daß jeder in Arbeitsposition stehende Werkzeughalter 30 in jeder Werkzeugstation 23 exakt dieselbe Ausrichtung relativ zur Spindelachse 16 hat.

In gleicher Weise ist das zweite Ausrichtelement 74 an jedem Werkzeughalterkörper 32 dadurch justierbar, daß dieser auf eine zeichnerisch nicht dargestellte, jedoch mit einem fest ausgerichteten ersten Ausrichtelement 64 versehene Meister-Werkzeugstation gesetzt und so ausgerichtet wird, daß die Werkzeugachse 102 eine definierte Orientierung relativ zur MeisterMeister-Werkzeugstation aufweist. In dieser Stellung des Werkzeughalterkörpers 32 wird das zweite Ausrichtelement 74 beispielsweise mittels der Schrauben 90 fixiert und anschließend in dieser Stellung noch durch die Stifte 94 unverschieblich gegenüber dem Werkzeughalterkörper 32 fixiert.

Jeder Werkzeughalter 30 mit einem derart justierten zweiten Ausrichtelement 74 ist somit in jede mit einem entsprechend den vorstehenden Ausführungen justierten ersten Ausrichtelement 64 versehene Werkzeugstation 23 des Revolverkopfs 60 einsetzbar, wobei die Werkzeugachse 102 in jeder in Arbeitsposition stehenden Werkzeugstation 23 dieselbe Orientierung aufweist.

Bei einem zweiten Ausführungsbeispiel einer erfindungsgemäßen Werkzeugfixiereinrichtung ist das erste Ausrichtelement 64 nicht nur auf der vorderen Stirnfläche 62 des Revolverkopfs 60 angeordnet, sondern auch an einer hinteren Stirnfläche 112 und in gleicher Weise ist ein zweites Ausrichtelement 74 nicht nur an der der Stirnfläche 62 korrespondierenden Stirnfläche 86 des Werkzeughalterkörpers 32 gehalten, sondern auch an der der hinteren Stirnfläche 112 entsprechenden Stirnfläche 114.

Eine derartige doppelte Anordnung eines Paares aus einem ersten und einem zweiten Ausrichtelement ist insbesondere dann vorteilhafterweise einsetzbar, wenn große Zerspanungskräfte von dem Revolverkopf 60 auf den Werkzeughalter 30 zu übertragen sind und somit auch große Momente im Hinblick auf eine Verdrehung des Werkzeughalters 30 um die Längsachse 40 auftreten.

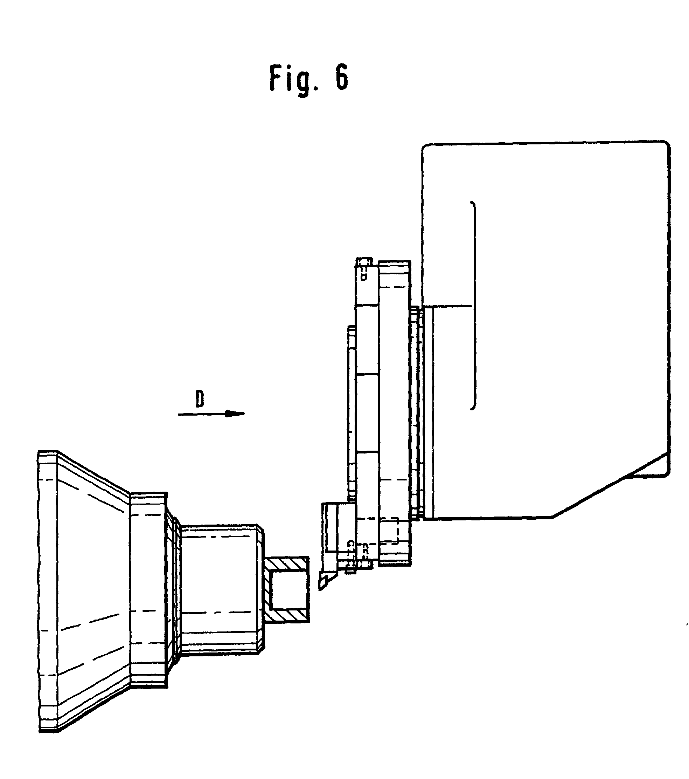

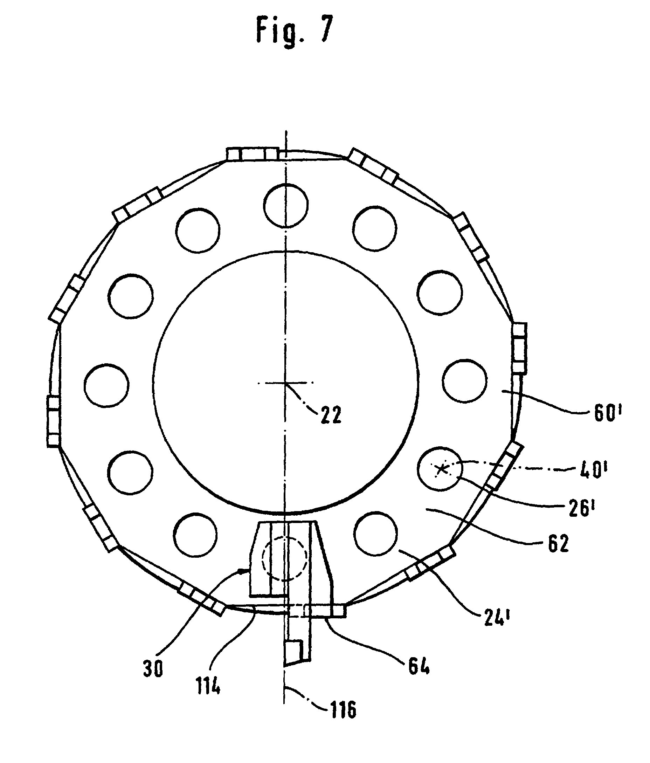

Bei einem dritten Ausführungsbeispiel einer erfindungsgemäßen Werkzeugfixiereinrichtung, dargestellt in Fig. 6 und 7, ist der Revolverkopf 60' mit Aufnahmen 26' versehen, deren Längsachsen 40' parallel zur Revolverschaltachse 22 verlaufen, so daß beispielsweise die vordere Stirnfläche 62 oder auch die hintere Stirnfläche des Revolverkopfs 60' die Aufnahmen 26' umgebende Auflageflächen 24' für die Anlageflächen 34 der Werkzeughalter 30 bilden.

In diesem Fall sind die ersten Ausrichtelemente 64 an parallel zur Revolverschaltachse 22 verlaufenden Mantelflächen 114, vorzugsweise an ebenen Abschnitten derselben, angeordnet und in gleicher Weise wie beim ersten Ausführungsbeispiel mit dem Revolverkopf 60 verbunden.

Die an den Stirnflächen 86 der Werkzeughalterkörper 32 gehaltenen zweiten Ausrichtelemente 74 greifen dann in gleicher Weise, wie beim ersten Ausführungsbeispiel beschrieben, mit ihren zahnähnlichen Vorsprüngen 76 in die Aussparungen 66 ein, um eine formschlüssige Verdrehfixierung des Werkzeughalters 30 relativ zur Längsachse 40 des Schafts 28 zu bilden.

Beispielsweise sind in diesem Fall die Ausrichtelemente 64 und 74 asymmetrisch zu die Revolverschaltachse 22 und die Längsachse 40' schneidenden Geraden 116 angeordnet.

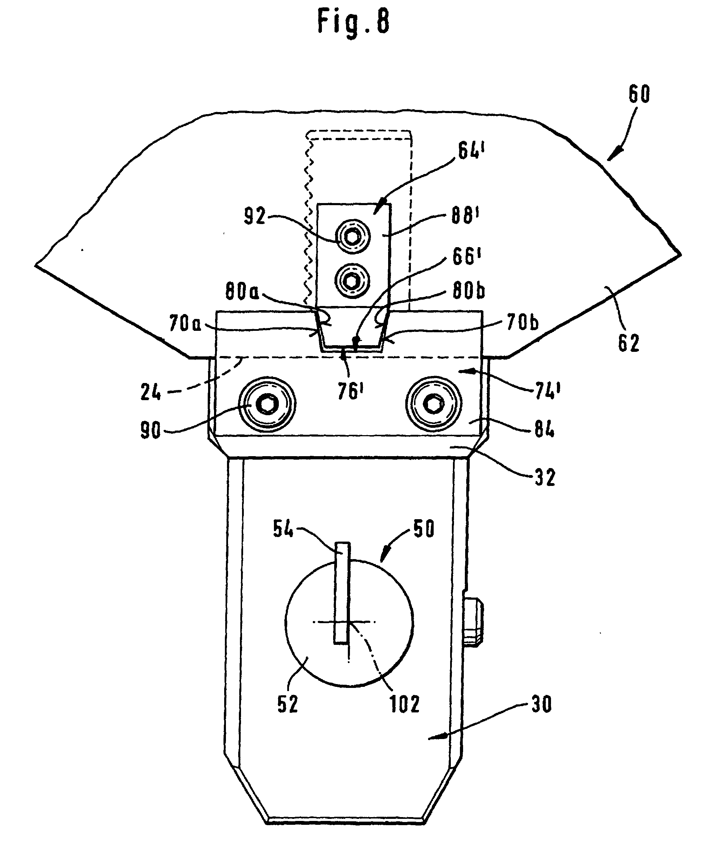

Bei einem vierten Ausführungsbeispiel, dargestellt in Fig. 8, umfaßt das erste Ausrichtelement 64 im Gegensatz zu den voranstehend beschriebenen Ausführungsbeispielen das Formschlußelement 76' mit den Außenflanken 80a und 80b, während das zweite Ausrichtelement 74, welches am Werkzeughalterkörper 32 angeordnet ist, das Formschlußelement 66' mit den Fixierflanken 70a und 70b aufweist.

Im vorliegenden Fall sind die Fixierflanken 70a und 70b so ausgebildet, daß sie ebene Flankenflächen bilden, welche die Schenkel eines Trapezes darstellen.

Ferner ist das Ausrichtelement 64' so ausgebildet, daß es einen Ausrichtelementkörper 88' aufweist, welcher sich parallel zur Stirnfläche 62 des Revolverkopfes 60 lediglich über eine Breite erstreckt, welche einer Breite des das Formschlußelement bildenden zahnähnlichen Vorsprungs 76 entspricht.

Aber auch bei diesem Ausführungsbeispiel liegt das Formschlußelement 76' auf einer dem Werkzeughalter 30 abgewandten Seite der durch die Auflagefläche 24 definierten Ebene.

Zur Herstellung des Formschlußes ist es daher erforderlich, daß auch das Formschlußelement 66' auf dieser Seite der durch die Auflagefläche 24 definierten Ebene liegt. Daher erstreckt sich der Ausrichtelementkörper 84 ausgehend von seinem an dem Werkzeughalterkörper 32 anliegenden Bereich über die Anlagefläche 34 desselben hinaus und übergreift in diesem Fall die Stirnfläche 62 des Revolverkopfes 60.

Darüber hinaus ist bei dem vierten Ausführungsbeispiel vorgesehen, daß sowohl das Ausrichtelement 64' als auch das Ausrichtelement 74' mittels Schrauben 92 bzw. 90 an dem Revolverkopf 60 bzw. dem Werkzeughalterkörper 32 fixiert sind, wobei mittels der Schrauben 92 bzw. 90 eine kraftschlüssige Fixierung der Ausrichtelement 64' bzw. 74' in der justierten Stellung erfolgt, die im Fall von Kollisionen des Werkzeugs überwindbar ist.

Im übrigen ist das vierte Ausführungsbeispiel in gleicher Weise ausgebildet wie das erste Ausführungsbeispiel, so daß auf die Ausführungen zum ersten Ausführungsbeispiel vollinhaltlich Bezug genommen wird.

## Patentansprüche

1. Werkzeugfixiereinrichtung für Werkzeugmaschinen, umfassend einen Werkzeughalter (30) mit einem das Werkzeug tragenden Werkzeughalterkörper (32), welcher eine Anlagefläche (34) aufweist und einen von dieser abstehenden Schaft (28) zum Spannen des Werkzeughalters (30) trägt, einen Werkzeugträger (20) mit einer Werkzeugstation (23), umfassend eine Auflagefläche (24) und eine Aufnahme (26) für den Schaft (28), wobei die Anlagefläche (34) dann gegen die Auflagefläche (24) anliegt, wenn der Werkzeughalter (30) mit seinem Schaft (28) in der Aufnahme (26) eingespannt ist, und eine zwischen Werkzeughalterkörper (32) und Werkzeugträger (20) wirksame Ausrichteinrichtung zur Positionierung des Werkzeughalterkörpers (32) relativ zum Werkzeugträger (20),
**dadurch gekennzeichnet, daß** die Ausrichteinrichtung ein erstes (64, 64') und ein zweites Ausrichtelement (74, 74') umfaßt, von denen das erste (64, 64') am Werkzeugträger (20) und das zweite (74, 74') am Werkzeughalterkörper (32) angeordnet ist, daß eines der Ausrichtelemente (64, 64', 74, 74') relativ zu dem dieses tragenden Werkzeugträger (20) oder Werkzeughalterkörper (32) justierbar ist, und daß die Ausrichtelemente (64, 64',74, 74') bei in der Aufnahme (26) eingespannten Schaft (28) mittels spielfrei ineinandergreifenden Formschlußelementen (66, 66', 76, 76') den Werkzeughalterkörper (32) relativ zum Werkzeugträger (20) in einer einzigen Stellung ausgerichtet fixieren.

2. Werkzeugfixiereinrichtung nach Anspruch 1, **dadurch gekennzeichnet, daß** die Formschlußelemente (66, 66',76, 76') durch eine Bewegung in Einsteckrichtung (81) des Werkzeughalters (30) in der Werkzeugstation (23) in Eingriff bringbar sind.

3. Werkzeugfixiereinrichtung nach Anspruch 1 oder 2, **dadurch gekennzeichnet, daß** eines der Formschlußelemente eine Aufnahme (66, 66') mit einander zugewandten Fixierflanken (70a,b) und das andere der Formschlußelemente einen Einsatz (76, 76') für die Aufnahme (66, 66') mit in entgegengesetzte Richtungen weisenden Außenflanken (80a,b) aufweist.

4. Werkzeugfixiereinrichtung nach Anspruch 3, **dadurch gekennzeichnet, daß** die Fixierflanken (70a,b) quer zu der Einsteckrichtung (81) einen Abstand aufweisen, welcher mit zunehmender Erstreckung der Fixierflanken (70a,b) in Einsteckrichtung (81) geringer wird.

5. Werkzeugfixiereinrichtung nach Anspruch 3 oder 4, **dadurch gekennzeichnet, daß** die Fixierflanken (70a,b) und die Außenflanken (80a,b) aneinander angepaßt sind und zumindest in einer Richtung (81) linienförmig aneinander anliegen.

6. Werkzeugfixiereinrichtung nach einem der Ansprüche 3 bis 5, **dadurch gekennzeichnet, daß** die Fixierflanken (70a,b) oder die Außenflanken (80a,b) konvex ausgebildet sind.

7. Werkzeugfixiereinrichtung nach einem der voranstehenden Ansprüche, **dadurch gekennzeichnet, daß** die Formschlußelemente (66, 66', 76, 76') beim formschlüssigen Ineinandergreifen im wesentlichen flächig aneinander anliegen.

8. Werkzeugfixiereinrichtung nach Anspruch 7, **dadurch gekennzeichnet, daß** die Formschlußelemente (66, 66', 76, 76') mit Paßflächen aneinander anliegen.

9. Werkzeugfixiereinrichtung nach einem der voranstehenden Ansprüche, **dadurch gekennzeichnet, daß** die Formschlußelemente (66, 66', 76, 76') jeweils einstückig an das jeweilige Ausrichtelement (64, 74', 74, 64') angeformt sind.

10. Werkstückfixiereinrichtung nach einem der voranstehenden Ansprüche, **dadurch gekennzeichnet, daß** die Ausrichtelemente (64, 64', 74, 74') nach ihrer exakten Justierung relativ zum Werkzeugträger (20) oder Werkzeughaltekörper (32) in der justierten Stellung fixiert sind.

11. Werkzeugfixiereinrichtung nach einem der voranstehenden Ansprüche, **dadurch gekennzeichnet, daß** die Ausrichtelemente (64, 64', 74, 74') nach ihrer exakten Justierung relativ zum Werkzeugträger (20) oder Werkzeughalterkörper (32) unverschiebbar an diesen fixiert sind.

12. Werkzeugfixiereinrichtung nach Anspruch 11, **dadurch gekennzeichnet, daß** die Ausrichtelemente (64, 64', 74, 74') über Formschlußverbindungen (94,96) unverschiebbar mit dem Werkzeugträger (20) oder dem Werkzeughalterkörper (32) verbunden sind.

13. Werkzeugfixiereinrichtung nach einem der voranstehenden Ansprüche, **dadurch gekennzeichnet, daß** das erste Ausrichtelement (64, 64') und das diesem zugeordnete Formschlußelement (66, 66') auf einer dem Werkzeughalter (30) abgewandten Seite einer durch die Auflagefläche (24) definierten Ebene liegen.

14. Werkzeugfixiereinrichtung nach einem der voranstehenden Ansprüche, **dadurch gekennzeichnet, daß** der Werkzeugträger (20) eine Vielzahl von Werkzeugstationen (23) aufweist, in welche Werkzeughalter (30) einsetzbar sind, daß mindestens zwei Werkzeugstationen (23) jeweils mit einem ersten Ausrichtelement (64, 64') versehen sind, welches so justiert ist, daß ein in jede dieser Werkzeugstationen (23) eingesetzter und mit einem zweiten Ausrichtelement (74, 74') versehener Werkzeughalter (30) in seiner jeweiligen Arbeitsposition identisch ausgerichtet ist.

15. Werkzeugmaschine, umfassend eine Aufnahme (12) für ein Werkstück (14) und eine Werkzeugfixiereinrichtung, wobei Werkstück und Werkzeugfixiereinrichtung relativ zueinander bewegbar sind, **dadurch gekennzeichnet, daß** die Werkzeugfixiereinrichtung nach einem der voranstehenden Ansprüche ausgebildet ist.

## Claims

1. Tool fixing device for machine tools, comprising a tool holder (30) with a tool holder body (32) bearing the tool and having a contact surface (34) and a shaft (28) projecting therefrom for clamping the tool holder (30), a tool carrier (20) with a tool station (23), comprising a support surface (24) and a receiving means (26) for the shaft (28), the contact surface (34) abutting on the support surface (24) when the tool holder (30) is clamped in the receiving means (26) with its shaft (28), and an aligning device operative between tool holder body (32) and tool carrier (20) for positioning the tool holder body (32) relative to the tool carrier (20), **characterized in that** the aligning device comprises a first (64, 64') and a second aligning element (74, 74'), the first element (64, 64') being arranged on the tool carrier (20) and the second (74, 74') on the tool holder body (32), that one of the aligning elements (64, 64', 74, 74') is adjustable relative to the tool carrier (20) or tool holder body (32) carrying it, and that when the shaft (28) is clamped in the receiving means (26) the aligning elements (64, 64', 74, 74') fix the tool holder body (32) so as to be oriented in a single position relative to the tool carrier (20) by means of form-fitting elements (66, 66', 76, 76') engaging in one another without clearance.

2. Tool fixing device as defined in claim 1, **characterized in that** the form-fitting elements (66, 66', 76, 76') are adapted to be brought into engagement in the tool station (23) by a movement in insertion direction (81) of the tool holder (30).

3. Tool fixing device as defined in claim 1 or 2, **characterized in that** one of the form-fitting elements has a receiving means (66, 66') with facing fixing flanks (70a,b) and the other one of the form-fitting elements has an insert (76, 76') for the receiving means (66, 66') with outer flanks (80a,b) pointing in opposite directions.

4. Tool fixing device as defined in claim 3, **characterized in that** the fixing flanks (70a,b) have transversely to the insertion direction (81) a distance becoming smaller with increasing extension of the fixing flanks (70a,b) in insertion direction (81).

5. Tool fixing device as defined in claim 3 or 4, **characterized in that** the fixing flanks (70a,b) and the outer flanks (80a,b) are adapted to one another and abut on one another linearly at least in one direction (81).

6. Tool fixing device as defined in any one of claims 3 to 5, **characterized in that** the fixing flanks (70a,b) or the outer flanks (80a,b) are of a convex design.

7. Tool fixing device as defined in any one of the preceding claims, **characterized in that** the form-fitting elements (66, 66', 76, 76') abut essentially areally on one another during their form-fitting engagement in one another.

8. Tool fixing device as defined in claim 7, **characterized in that** the form-fitting elements (66, 66', 76, 76') abut on one another with fitting areas.

9. Tool fixing device as defined in any one of the preceding claims, **characterized in that** the form-fitting elements (66, 66', 76, 76') are each formed in one piece on the respective aligning element (64, 74', 74, 64').

10. Tool fixing device as defined in any one of the preceding claims, **characterized in that** after their exact adjustment relative to the tool carrier (20) or tool holder body (32) the aligning elements (64, 64', 74, 74') are fixed in the adjusted position.

11. Tool fixing device as defined in any one of the preceding claims, **characterized in that** after their exact adjustment relative to the tool carrier (20) or tool holder body (32) the aligning elements (64, 64', 74, 74') are fixed in position on these so as to be non-displaceable.

12. Tool fixing device as defined in claim 11, **characterized in that** the aligning elements (64, 64', 74, 74') are non-displaceably connected to the tool carrier (20) or the tool holder body (32) via form-fitting connections (94, 96).

13. Tool fixing device as defined in any one of the preceding claims, **characterized in that** the first aligning element (64, 64') and the form-fitting element (66, 66') associated with it are located on a side of a plane defined by the support surface (24) facing away from the tool holder (30).

14. Tool fixing device as defined in any one of the preceding claims, **characterized in that** the tool carrier (20) has a plurality of tool stations (23), into which tool holders (30) are insertable, that at least two tool stations (23) are each provided with a first aligning element (64, 64') adjusted such that a tool holder (30) inserted into each of these tool stations (23) and provided with a second aligning element (74, 74') is identically aligned in its respective operating position.

15. Machine tool, comprising a receiving means (12) for a workpiece (14) and a tool fixing device, the workpiece and the tool fixing device being movable relative to one another, **characterized in that** the tool fixing device is designed in accordance with any one of the preceding claims.

## Revendications

1. Dispositif de fixation d'outil pour machines-outils, comportant un porte-outil (30) avec un corps de porte-outil (32) qui porte l'outil et présente une surface d'appui (34), et porte une broche (28), dépassant de cette surface d'appui, pour brider le porte-outil (30), ainsi qu'un support d'outils (20) avec une station d'outil (23), comprenant une surface de repos (24) et un réceptacle (26) pour la broche (28), la surface d'appui (34) s'appuyant contre la surface de repos (24) lorsque le porte-outil (30) est bridé, par sa broche (28), dans le réceptacle (26), ainsi qu'un dispositif de positionnement, intervenant entre corps de porte-outil (32) et support d'outils (20) pour le positionnement du corps de porte-outil (32) par rapport au support d'outils (20),
**caractérisé par le fait que** le dispositif de positionnement comporte un premier (64, 64') et un second (74, 74') éléments de positionnement, dont le premier (64, 64') est disposé sur le support d'outils (20) et le second (74, 74') est sur le corps de porte-outil (32), que l'un des éléments de positionnement (64, 64', 74, 74') peut être ajusté par rapport au support d'outils (20) ou au corps de porte-outil (32) qui le porte, et que, la broche (28) étant bridée dans le réceptacle (26), les éléments de positionnement (64, 64', 74, 74'), au moyen d'éléments de fixation par complémentarité de forme (66, 66', 76, 76'), venant en prise l'un dans l'autre sans jeu, fixent le corps de porte-outil (32) orienté dans une unique position par rapport au support d'outils (20).

2. Dispositif de fixation d'outil selon la revendication 1, **caractérisé par le fait que** les éléments de fixation par complémentarité de forme (66, 66', 76, 76') peuvent être amenés en prise dans la station d'outil (23) grâce à un mouvement dans le sens (81) de l'enfichage du porte-outil (30).

3. Dispositif de fixation d'outil selon la revendication 1 ou 2, **caractérisé par le fait que** l'un des éléments de fixation par complémentarité de forme présente un réceptacle (66, 66') à flancs de Fixation (70a, b) orientés l'un vers l'autre, et l'autre des éléments de fixation par complémentarité de forme présente un saillant (76, 76') à insérer dans le réceptacle (66, 66') avec des flancs extérieurs (80a, b) orientés en sens opposés.

4. Dispositif de fixation d'outil selon la revendication 3, **caractérisé par le fait que** les flancs de fixation (70a, b), transversalement à la direction d'enfichage (81) ,sont à une distance l'un de l'autre qui décroît lorsque l'extension des flancs de fixation (70a, b) dans le sens de l'enfichage (81) croît.

5. Dispositif de fixation d'outil selon la revendication 3 ou 4, **caractérisé par le fait que** les flancs de fixation (70a, b) et les flancs extérieurs (80a, b) sont adaptés l'un sur l'autre et s'appuient linéairement l'un contre l'autre au moins selon une direction (81).

6. Dispositif de fixation d'outil selon l'une des revendications 3 à 5, **caractérisé par le fait que** les flancs de fixation (70a, b) ou les flancs extérieurs (80a, b) sont conçus convexes.

7. Dispositif de fixation d'outil selon l'une des revendications précédentes, **caractérisé par le fait que**, la venue en prise par complémentarité de forme étant réalisée, les éléments de fixation par complémentarité de forme (66, 66', 76, 76') s'appuient l'un contre l'autre sensiblement à plat.

8. Dispositif de fixation d'outil selon la revendication 7, **caractérisé par le fait que** les éléments de fixation par complémentarité de forme (66, 66', 76, 76') s'appuient l'un contre l'autre par des surfaces ajustées.

9. Dispositif de fixation d'outil selon l'une des revendications précédentes, **caractérisé par le fait que** les éléments de fixation par complémentarité de forme (66, 66', 76, 76') sont chacun formés d'une seule pièce sur l'élément de positionnement (64, 74', 74, 64') respectif.

10. Dispositif de fixation d'outil selon l'une des revendications précédentes, **caractérisé par le fait qu'**après leur ajustement exact par rapport au support d'outils (20) ou au corps de porte-outil (32), les éléments de positionnement sont fixés dans la position ajustée.

11. Dispositif de fixation d'outil selon l'une des revendications précédentes, **caractérisé par le fait qu'**après leur ajustement exact par rapport au support d'outils (20) ou au corps de porte-outil (32), les éléments de positionnement leur sont fixés sans possibilité de coulissement.

12. Dispositif de fixation d'outil selon la revendication 11, **caractérisé par le fait que** les éléments de positionnement (64, 64', 74, 74') sont reliés, sans possibilité de coulissement avec le support d'outils (20) ou le corps de porte-outil (32) par l'intermédiaire de liaisons par complémentarité de forme (94, 96).

13. Dispositif de fixation d'outil selon l'une des revendications précédentes, **caractérisé par le fait que** le premier élément de positionnement (64, 64') et l'élément de fixation par complémentarité de forme (66, 66') qui lui est associé se situent du côté opposé au porte-outil (30) d'un plan défini par la surface de repos (24).

14. Dispositif de fixation d'outil selon l'une des revendications précédentes, **caractérisé par le fait que** le support d'outils (20) présente une pluralité de stations d'outil (23) dans lesquelles peuvent s'insérer des porte-outil (30), qu'au moins deux stations d'outil (23) présentent chacune un premier élément de positionnement (64, 64') qui est ajusté de façon qu'un porte-outil (30) inséré dans chacune de ces stations d'outil (23) et présentant un second élément de positionnement (74, 74') soit identiquement positionné dans sa position de travail respective.

15. Machine outil comportant un réceptacle (12) pour une pièce à usiner (14) et un dispositif de fixation d'outil, dans laquelle la pièce à usiner et le dispositif de fixation d'outil peuvent se déplacer l'un par rapport à l'autre, **caractérisée par le fait que** le dispositif de fixation d'outil est conçu selon l'une des revendications précédentes.
